(19) Europäisches Patentamt
European Patent Office
Office européen des brevets

(11) Veröffentlichungsnummer: **0 088 285**
**B1**

(12) # EUROPÄISCHE PATENTSCHRIFT

(45) Veröffentlichungstag der Patentschrift: **28.10.87**

(51) Int. Cl.⁴: **C 08 F 8/12**

(21) Anmeldenummer: **83101717.3**

(22) Anmeldetag: **23.02.83**

(54) **Verfahren zur Herstellung von Carboxylgruppen enthaltenden Fluorkohlenstoffpolymerisaten sowie einige Ausgangsstoffe hierfür und die bei dem Verfahren als Zwischenprodukte auftretenden Fluorsulfatoverbindungen.**

(30) Priorität: **27.02.82 DE 3207142**
**17.08.82 DE 3230528**

(43) Veröffentlichungstag der Anmeldung:
**14.09.83 Patentblatt 83/37**

(45) Bekanntmachung des Hinweises auf die Patenterteilung:
**28.10.87 Patentblatt 87/44**

(84) Benannte Vertragsstaaten:
**BE DE FR GB IT NL**

(56) Entgegenhaltungen:
**GB - A - 2 051 831**
**GB - A - 2 053 902**
**US - A - 4 267 364**

**CHEMICAL ABSTRACTS, Band 86, Nr. 18, 1977, Seite 56, Nr. 122541y, Columbus, Ohio, US; & JP - A - 77 05 888 (ASAHI GLASS CO., LTD.) 17.01.1977**

(73) Patentinhaber: **HOECHST AKTIENGESELLSCHAFT, Postfach 80 03 20, D-6230 Frankfurt am Main 80 (DE)**

(72) Erfinder: **Blickle, Peter, Dr., Hattersheimer Strasse 14, D-6233 Kelkheim (Taunus) (DE)**
Erfinder: **Brandrup, Johannes, Dr., Am Allersberg 6, D-6200 Wiesbaden (DE)**
Erfinder: **Millauer, Hans, Dr., An den sieben Bäumen 21b, D-6236 Eschborn (DE)**
Erfinder: **Schwertfeger, Werner, Dr., Erlenstrasse 8, D-6306 Langgöns (DE)**
Erfinder: **Siegemund, Günter, Dr., Frankfurter Strasse 21, D-6238 Hofheim am Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Carboxylgruppen enthaltende unvernetzte Fluorkohlenstoffpolymerisate spielen eine technisch bedeutsame Rolle hauptsächlich in Form von Kationenaustauschermembranen in Elektrolysezellen, insbesondere für die Chloralkalielektrolyse.

Die verschiedenen bekannten derartigen Polymerisate unterscheiden sich zwar strukturell mehr oder weniger; gemeinsam ist ihnen jedoch in praktisch allen Fällen der Aufbau aus durchweg perfluorierten, linearen Kettenmolekülen mit Carboxylgruppen tragenden – ebenfalls perfluorierten, gegebenenfalls durch Sauerstoffatome unterbrochenen – Seitenketten. Solche Polymerisate sowie deren Herstellung und Eigenschaften werden in beispielhafter Weise beschrieben in dem Artikel von Maomi Seko «Ion-Exchange Membrane For The Chlor-Alkali Process» (vorgelegt auf der 159. Sitzung der Electrochemical Society Minneapolis, Minnesota, vom 13. Mai 1981). Die dort beschriebenen Polymerisate werden hergestellt durch Copolymerisation z.B. von Monomeren der Formel

$$CF_2{=}CF{-}O{-}(CF_2{-}\underset{}{\overset{CF_3}{\overset{|}{C}}}F{-}O)_m{-}(CF_2)_nCOOR$$

(m = 0 oder 1, n = 1-4 und R = Alkyl)

mit Tetrafluorethylen $CF_2 = CF_2$. Die Polymerisate werden dann extrudiert und verformt sowie zwecks Umwandlung der Estergruppen in die Carboxylgruppen (in freier oder Salzform) einer Hydrolysebehandlung unterworfen.

Nach dem vorerwähnten Artikel können als Monomere für die Herstellung entsprechender Fluorkohlenstoffpolymerisate auch solche perfluorierten Vinylverbindungen verwendet werden, die z.B. $SO_2F$-Gruppen im Molekül tragen, wie etwa

$$CF_2{=}CF{-}O{-}(CF_2{-}\overset{CF_3}{\overset{|}{C}}F{-}O)_m{-}(CF_2)_n{-}SO_2F$$

(m = 0 oder 1, N = 1-4)

Durch die Homo- oder Copolymerisation dieser Verbindungen entstehen dann Polymerisate mit $-CF_2-SO_2F$-Gruppen in den Seitenketten. Die $-CF_2-SO_2F$-Gruppen können zu den $-CF_2-SO_3H$-Gruppen hydrolysiert oder z.B. auch durch Reduktion in COOH-Gruppen umfunktionalisiert werden. Letzteres – die Umfunktionalisierung der $-CF_2-SO_2F$- oder auch von $-CF_2-SO_3H$-Gruppen in die COOH-Gruppen ist z.B. bekannt aus der US-A 4 267 364.

Die bekannten, Carboxylgruppen enthaltenden unvernetzten Fluorkohlenstoffpolymerisate werden somit durchweg hergestellt ausgehend von perfluorierten Monomeren mit noch einer weiteren funktionellen Gruppe (–COOR, $-SO_2F$, etc.) im Molekül. Da diese zweite funktionelle Gruppe meist bereits in einer frühen Stufe des Synthesewegs eingeführt werden muss, muss deren Reaktivität bei allen Folgestufen berücksichtigt werden; gegebenenfalls ist durch Anwendung besonderer Massnahmen der Erhalt dieser Gruppen sicherzustellen, was einen gewissen Nachteil der bekannten Synthesemethoden darstellt.

Es bestand daher die Aufgabe, Carboxylgruppen enthaltende, möglichst unvernetzte Fluorkohlenstoffpolymerisate unter Vermeidung dieses Nachteils herzustellen – d.h. also die Carboxylgruppe erst in einer möglichst späten Stufe des gesamten Synthesewegs einzuführen.

Diese Aufgabe konnte erfindungsgemäss durch Einführung der Carboxylgruppen in fertige unvernetzte Fluorkohlenstoffpolymerisate gelöst werden, deren lineare Makromoleküle Seitenketten mit der Endgruppe

$$-CHFX$$

worin $X = F$ oder $CF_3$

tragen.

Erfindungsgegenstand ist somit ein Verfahren zur Herstellung von Carboxylgruppen enthaltenden unvernetzten Fluorkohlenstoffpolymerisaten, welches durch folgende Reaktionsschritte gekennzeichnet ist:

a) Umsetzung von unvernetzten Fluorkohlenstoffpolymerisaten, deren lineare Makromoleküle Seitenketten mit der Endgruppe

$$-CHFX$$

worin $X = F$ oder $CF_3$

tragen, mit Peroxodisulfuryldifluorid $FSO_2O-OSO_2F$ zu den entsprechenden Fluorsulfatoderivaten mit den Seitenketten-Endgruppen

$$-\underset{\underset{OSO_2F}{|}}{C}FX$$

worin X die vorstehend angegebene Bedeutung besitzt

und

b) Umsetzung dieser Fluorsulfatoderivate

$b_1$) Im Falle von $X = F$

$b_{11}$) mit einem Alkohol der Formel ROH ($R = C_1$–$C_6$-Alkyl, vorzugsweise Methyl oder Ethyl) zu den entsprechenden Estern mit den Seitenketten-Endgruppen

–COOR (R = C1 bis C6-Alkyl,

vorzugsweise Methyl oder Ethyl),

welche zu den freien Carboxylgruppen

–COOH

als solchen oder in Salzform verseift werden, oder

$b_{12}$) mit Wasser, gegebenenfalls in Gegenwart eines Lösungsmittels und/oder von Basen direkt zu den Produkten mit der Carboxylgruppe

–COOH

in freier oder in Salzform als Seitenketten-Endgruppen, und

$b_2$) im Falle von $X = CF_3$

$b_{21}$) zu den entsprechenden Ketonen mit den Seitenketten-Endgruppen

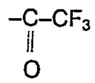

durch Zersetzung in Gegenwart katalytischer Mengen von Alkalifluoriden und/oder von aprotischen N-Basen und

$b_{22}$) Hydrolyse der Ketone zu den Produkten mit der Carboxylgruppe

$-COOH$

in freier oder in Salzform als Seitenketten-Endgruppen.

Formelmässig lässt sich dieses Verfahren (schematisch) wie folgt darstellen:

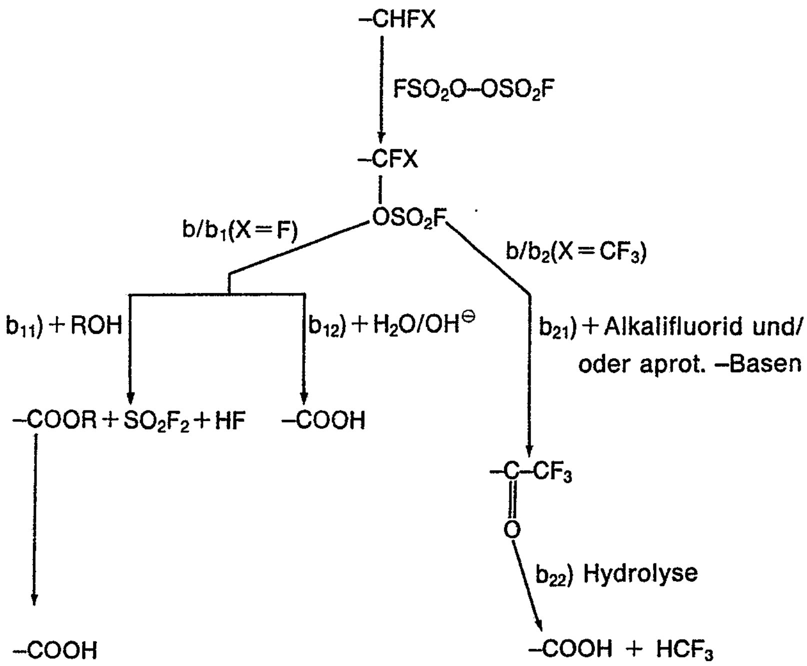


Das Verfahren erlaubt die Funktionalisierung von unvernetzten Fluorkohlenstoffpolymerisaten ohne funktionelle Gruppen; denn die $-CHFX$-Endgruppen der Seitenketten ($X = F$ oder $CF_3$) stellen keine funktionellen Gruppen dar. Wegen der Vermeidung besonderer und z.T. aufwendiger Massnahmen zum Erhalt der funktionellen Gruppen in einer Reihe von Syntheseschritten stellt das Verfahren einen erheblichen Fortschritt dar.

Bei der Umsetzung der unvernetzten Ausgangs-Fluorkohlenstoffpolymerisate, deren lineare Makromoleküle Seitenketten mit der Endgruppe $-CHFX$ ($X = F$ oder $CF_3$) tragen, mit Peroxodisulfuryldifluorid erfolgt überraschenderweise keine merkliche Vernetzung der linearen Makromoleküle und deren Seitenketten. Dies war nicht zu erwarten; denn es war zwar bekannt, dass monomere niedermolekulare perfluorierte Verbindungen, welche noch C–H-Gruppen besitzen, mit Peroxodisulfuryldifluorid die entsprechenden Fluorsulfato-Verbindungen ergeben. Das Copolymerisat aus Vinylidenfluorid $CF_2 = CH_2$ und Hexafluorpropylen $CF_3-CF = CF_2$ vernetzt jedoch unter dem Einfluss von Peroxodisulfuryldifluorid (vgl. C.G. Krespan «Synthesis and Pyrolysis of Fluorosulfates» in J. Fluorine Chemistry 2 (1972/73), S. 173ff., insbesondere S. 174). Bei polymeren perfluorierten Verbindungen, welche noch C–H-Gruppen besitzen, war also davon auszugehen, dass unter der Einwirkung von Peroxodisulfuryldifluorid eine erhebliche bis vollständige Vernetzung eintritt.

Die Ausgangsprodukte für das erfindungsgemässe Verfahren – d.s. also unvernetzte Fluorkohlenstoffpolymerisate, deren lineare Makromoleküle Seitenketten mit der Endgruppe $-CHFX$ ($X = F$ oder $CF_3$) tragen – enthalten ausser den H-Atomen in der besagten Endgruppe keine H-Atome mehr; sie sind teils bekannte, teils neue Polymere.

Polymere, in deren Seitenketten-Endgruppen-$CHFX$ $X = F$ ist, sind z.B. beschrieben in DE-B 1 806 097 sowie DE-A 2 639 109. Die dort genannten Ausgangs-Monomeren sind u.a.

$CF_2 = CF\ (CF_2)_n-CHF_2$

$CF_2 = CF-O-(CF_2)_n-CHF_2$

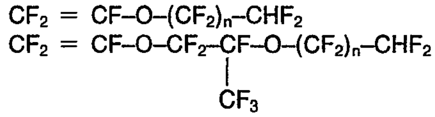

($n = 0$ oder 1–10)
etc.

Die Herstellung z.B. der Verbindung $CF_2 = CF-O-(CF_2)_6-CHF_2$ ist beschrieben in J. Org. Chem. Vol. 42, Nr. 25 (1977), S. 4055–58, insbesondere S. 4057; nach dieser Methode lassen sich im Prinzip auch die anderen hier in Frage kommenden Vinylether mit der $-CHF_2$ Endgruppe erhalten.

Als unvernetzte Fluorkohlenstoffpolymerisate mit X = $CF_3$ in der Seitenketten-Endgruppe sind diejenigen bevorzugt, welche durch Homo- oder Copolymerisation der Vinyläther der nachstehenden Formel erhalten werden:

$$CF_2{=}CF{-}O{-}CF_2{-}({-}\underset{\displaystyle CF_3}{\underset{|}{C}}F{-}O{-}CF_2{-})_n{-}CF_2{-}CHF{-}CF_3$$

(n = 0-5)

Die Herstellung dieser Vinyläther erfolgt mit Vorteil nach dem Verfahren der DE-A 3 207 143 (EP-A 0 087 737) durch

a) Umsetzung von 3-H-Perfluorbutansäurefluorid

$$FOC{-}CF_2{-}CHF{-}CF_3$$

mit Hexafluorpropenepoxid

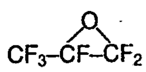

in Gegenwart mindestens eines ionogenen Fluorids als Katalysator sowie eines inerten aprotischpolaren Lösungsmittels bei einer Temperatur zwischen etwa −30 und etwa +100 °C, vorzugsweise zwischen etwa 0 und etwa +50 °C, zu dem folgenden Säurefluorid

$$FOC{-}({-}\underset{\displaystyle CF_3}{\underset{|}{C}}F{-}O{-}CF_2)_{n+1}{-}CF_2{-}CHF{-}CF_3$$

b) Pyrolyse dieses Säurefluorids als solchem oder nach Umwandlung in das entsprechende Alkalicarboxylat bei einer Temperatur zwischen etwa 100 und etwa 600 °C, und

c) Isolierung des bei der Pyrolyse gebildeten Vinylethers.

Die Homo- oder Copolymerisation (vorzugsweise mit $CF_2 = CF_2$) dieser Vinylether kann nach bekannten Verfahrensweisen, wie z.B. beschrieben in DE-B 1 806 097 und DE-A 2 639 109, geschehen.

Insbesondere die Copolymerisation kann erfolgen nach dem in der DE-B 1 806 097 beschriebenen Verfahren in einem flüssigen Cl-F-Alkan-Lösungsmittel in Gegenwart eines Niedertemperatur-Initiators, wie z.B. Bis-(perfluorpropionyl)-peroxid, bei Temperaturen von etwa 30–90 °C und niederen Drücken. Man kann aber auch die Copolymerisation in wässrigem Medium in Gegenwart von Emulgatoren und Puffersubstanzen sowie von freie Radiale bildenden Initiatoren, vorzugsweise als Emulsionspolymerisation, durchführen, wie beschrieben in der DE-A 2 639 109, wobei jedoch auf das Kettenübertragungsmittel ggf. verzichtet werden kann.

Insgesamt sind bevorzugte unvernetzte Ausgangs-Fluorkohlenstoffpolymerisate für das erfindungsgemässe Verfahren Polymerisate mit den wiederkehrenden Einheiten der Formel (A)

$$\begin{array}{l} | \\ CF_2 \\ | \\ CF{-}({-}O{-}CF_2{-}\overset{\displaystyle Y}{\overset{|}{C}}F{-})_u{-}O_v{-}(CF_2)_w{-}CHFX, \\ | \end{array} \qquad (A)$$

worin

u = 0, 1 oder 2,
v = 0 oder 1,
w = 1–7,
X und Y = unabhängig voneinander F oder $CF_3$, alleine oder neben anderen wiederkehrenden Einheiten der Formel (B)

$$-CF_2{-}CFZ- \qquad (B)$$

worin Z = Cl, F, $R_f$ oder $-OR_f$ ($R_f$ = $CF_3$ oder ggf. durch O-Atome unterbrochener $C_2$–$C_8$-Perfluoralkylrest)

Besonders bevorzugt ist in den vorgenannten Struktureinheiten

u = 0 oder 1,
v = 1,
w = 1–5, insbesondere 2–5,
X = F
Y = $CF_3$ und
Z = F, $CF_3$, $-O{-}CF_2{-}CF_2{-}CF_3$ oder $-O{-}CF_2{-}\underset{\displaystyle CF_3}{\underset{|}{C}}F{-}O{-}CF_2{-}CF_2{-}CF_3$,

insbesondere nur F.

Falls die Struktureinheiten, welche die Seitenketten-Endgruppen −CHFX tragen, nicht ausschliesslich in dem Polymerisat vorkommen (wenn es sich also nicht um ein Homopolymerisat handelt), beträgt das Verhältnis dieser Struktureinheiten zu den Struktureinheiten $-CF_2{-}CFZ-$ vorzugsweise 1:(2 bis 20), insbesondere etwa 1:(2–8). Die Copolymerisate dieser Zusammensetzung sind neue Verbindungen. Unter diesen sind wiederum die Bipolymeren mit Einheiten (A) und Einheiten $-CF_2{-}CF_2-$ als (B) sowie die Terpolymeren mit Einheiten (A) sowie Einheiten $-CF_2{-}CF_2-$ und $-CF_2{-}CFZ-$ worin Z die vorgenannte Bedeutung ausser F besitzt, als (B) bevorzugt.

Insbesondere bevorzugt sind Bipolymere enthaltend Einheiten A und Einheiten $-CF_2{-}CF_2-$, d.h. solche des Tetrafluorethylens, in den vorgenannten Molverhältnissen.

Die neuen Copolymerisate sind als Ausgangsprodukte für das erfindungsgemässe Verfahren besonders gut geeignet, weil sie in den Endprodukten die für Kationenaustauscher optimale Zahl von Carboxylgruppen ergeben.

Die Funktionalisierung der Ausgangs-Fluorkohlenstoffpolymerisate mit den Seitenketten-Endgruppen −CHFX beginnt mit dem für das erfindungsgemässe Verfahren wesentlichsten Reaktionsschritt a: der Umsetzung mit Peroxodisulfuryldifluorid.

Für diese Umsetzung ist es möglich, das Ausgangs-Fluorkohlenstoffpolymerisat in Form von geformten Gebilden wie z.B. von Folien einzusetzen; im Falle des Einsatzes als Folien ist eine

Foliendicke von etwa 5 bis 300 µm bevorzugt. Um dem Peroxodisulfuryldifluorid die Möglichkeit zur noch rascheren Durchdringung des Polymers zu bieten, wird dieses vorteilhafter als Pulver eingesetzt; eine günstige Korngrösse des Pulvers liegt zwischen etwa 2 und 100 µm, vorzugsweise etwa 5 bis 50 µm.

Das Peroxodisulfuryldifluorid ist nach bekannten Methoden herstellbar wie z.B. beschrieben von F.B. Dudley in J. Chem. Soc. 1963, S. 3407 bis 3411. Als Herstellungsmethoden kommen also sowohl rein chemische als auch elektrochemische Methoden in Betracht.

Rein chemische Methoden sind z.B. die direkte Reaktion von $SO_3$ mit Fluor unter der Katalyse von $Ag_2F_2$ oder die Oxidation von Metallfluorsulfonaten mit Fluor.

Als elektrochemische Methode kommt vor allem die anodische Oxidation von Lösungen von Alkalifluorsulfonaten in Fluorsulfonsäure in Frage. Das nach dieser elektrochemischen Methode hergestellte Peroxodisulfuryldifluorid ist auch das für das erfindungsgemässe Verfahren bevorzugt verwendete Produkt.

Bei der Umsetzung des Ausgangs-Fluorkohlenstoffpolymerisats mit dem elektrochemisch hergestellten Peroxid sind dabei sowohl «in-cell» als auch «ex-cell» Verfahren möglich.

«in-cell» bedeutet, dass sich das umzusetzende Polymerisat im Elektrolyt in der elektrochemischen Zelle befindet.

«ex-cell» heisst dagegen, dass sich das Polymerisat in einem zweiten Gefäss bzw. Reaktor befindet, in welches bzw. welchen der peroxidhaltige Elektrolyt z.B. durch Umpumpen gebracht wird. Es sind auch «ex-cell»-Umsetzungen möglich, bei denen das Polymerisat und das Peroxid nach dessen Abtrennung aus der elektrolysierten Fluorsulfonsäure in einem anderen Verdünnungsmittel zur Reaktion gebracht werden; solche Verdünnungsmittel sind z.B. Perfluoralkane, perfluorierte Ether, $N(C_4F_9)_3$ und Perfluoralkane mit Fluorsulfatogruppen.

Zur Durchführung der «in-cell»-Verfahren und zur Herstellung des für «ex-cell»-Verfahren benötigten Peroxids eignen sich elektrochemische Zellen in Topf- oder Trog-Form. Die elektrochemischen Zellen können geteilte oder ungeteilte Zellen sein, wobei im allgemeinen die ungeteilte Form völlig ausreichend ist. Ihrer einfacheren und billigeren Bauweise steht allerdings eine geringfügig niedrigere Stromausbeute gegenüber, welche durch die kathodische Reduktion des Peroxodisulfuryldifluorids bedingt ist.

In einer geteilten Zelle können z.B. Glasfritten oder poröses Polytetrafluorethylen als Diaphragma Verwendung finden.

Als Elektrodenmaterialien kommen die für die elektrochemische Erzeugung bekannten Stoffe in Frage.

Als Anodenmaterialien sind daher z.B. Platin und Platinlegierungen mit Metallen der Platingruppe und/oder glasartiger Kohlenstoff geeignet; bevorzugtes Anodenmaterial ist hierunter glasartiger Kohlenstoff.

Als Kathodenmaterialien eignen sich die aufgeführten Anodenmaterialien ebenfalls; daneben sind andere Metalle und Metallegierungen, vorzugsweise rostfreie Stähle, verwendbar. Bevorzugtes Kathodenmaterial ist – wie auch bevorzugtes Anodenmaterial – glasartiger Kohlenstoff.

Der Elektrolyt besteht aus Fluorsulfonsäure, in der zur Verbesserung der elektrischen Leitfähigkeit ein Salz der Fluorsulfonsäure gelöst ist. Besonders bevorzugte derartige Leitsalze sind die Alkalifluorsulfonate. Solche Elektrolyte werden nach an sich bekannten Verfahren hergestellt.

Beim erfindungsgemässen Verfahren ist es bevorzugt, Reaktionsschritt a) mit elektrochemisch erzeugtem Peroxodisulfuryldifluorid im «in-cell»-Verfahren derart durchzuführen, dass man das unvernetzte Ausgangs-Fluorkohlenstoffpolymerisat mit den Seitenketten-Endgruppen –CHFX (X = F oder $CF_3$) in einem Elektrolyten aus Fluorsulfonsäure und einem Alkalifluorsulfonat unter Verwendung von Platin, Platinlegierungen mit Metallen der Platingruppe und/oder von glasartigem Kohlenstoff als Anodenmaterialien und von üblichen, jedoch unter den Elektrolysebedingungen stabilen Kathodenmaterialien, elektrolysiert.

Die Reaktionstemperatur kann in einem ziemlich weiten Bereich – zwischen etwa $-10$ und etwa $+80\,°C$ – gewählt werden; vorzugsweise liegt sie aber zwischen etwa 5 und etwa 30 °C.

Obwohl prinzipiell unter- oder überatmosphärischer Druck möglich ist, ist Normaldruck schon aus wirtschaftlichen Gründen bevorzugt.

Die angewandten Stromdichten betragen im allgemeinen zwischen etwa 2 und 200 $mA \cdot cm^{-2}$, vorzugsweise zwischen etwa 30 und 100 $mA \cdot cm^{-2}$, bezogen auf die Anode. Die Kathodenstromdichte wird etwa zwei- bis dreissigfach höher gewählt, was durch entsprechende Verkleinerung der Kathodenoberfläche erreicht werden kann. Dadurch soll in einer ungeteilten Zelle die diffusionskontrollierte kathodische Reduktion des Peroxodisulfuryldifluorids zurückgedrängt werden.

Auf diese Weise werden Peroxodisulfuryldifluoridkonzentrationen zwischen etwa 0,1 bis etwa 2,5 $mol \cdot l^{-1}$ eingestellt.

Für eine rasche Umsetzung mit dem Polymerisat sind natürlich möglichst hohe Peroxidkonzentrationen zweckmässig. Die Kontrolle der Peroxidkonzentration erfolgt nach dafür an sich bekannten Methoden, wie z.B. durch Iodometrie.

Die Zeit für die Reaktion zwischen Peroxodisulfuryldifluorid und Polymerisat liegt im allgemeinen zwischen etwa 1 und etwa 100 Stunden, vorzugsweise zwischen etwa 10 und etwa 70 Stunden.

Beim «ex-cell»-Verfahren wird das Peroxodisulfuryldifluorid analog der beim «in-cell»-Verfahren beschriebenen Methode hergestellt. Die Umsetzung mit dem Polymerisat erfolgt aber dann in einem anderen Reaktionsgefäss. Dabei kann das Peroxodisulfuryldifluorid entweder in der Elektrolytflüssigkeit verbleiben – die Reaktion verläuft dann im selben Medium wie beim «in-cell»-Verfahren – oder aber es wird nach üblichen Methoden (wie z.B. destillativ) aus dem Elektrolyten

abgetrennt und mit einem der vorerwähnten fluorierten Lösungsmittel vermischt. Eine etwa 3 bis 5 molare Lösung von Peroxodisulfuryldifluorid ist hier bevorzugt; jedoch kann der Lösungsmittelanteil auch noch kleiner gehalten oder ganz auf das Lösungsmittel verzichtet werden.

Vorzugsweise wird das Peroxodisulfuryldifluorid jedoch in Lösung eingesetzt.

Nach der Beendigung der Umsetzung des Polymerisats mit dem Peroxodisulfuryldifluorid kann die Aufarbeitung sowohl beim «in-cell»- wie beim «ex-cell»-Verfahren prinzipiell in gleicher Weise erfolgen.

Zunächst wird zu diesem Zweck die flüssige Phase vom Polymerisat abgetrennt, was durch dafür bekannte Methoden erfolgen kann (z.B. Abdestillieren, Abfiltrieren oder Abdekantieren). Auf diese Weise abgetrennte Elektrolytphasen sind ohne weiteres für einen weiteren Ansatz wiederverwendbar, ebenso durch Destillation zurückgewonnene Fluorsulfonsäure.

Zur Entfernung von am Polymerisat anhaftender Fluorsulfonsäure und gegebenenfalls Lösemitteln wird das Polymerisat getrocknet, beispielsweise in einem Inertgasstrom oder unter vermindertem Druck.

Auf diese Weise werden Polymerisate erhalten, die in den Seitenketten Fluorsulfatogruppen tragen. Der Umsatz, d.h. die Anzahl der eingeführten Fluorsulfatogruppen, bezogen auf die anfänglich vorhandene Anzahl von Wasserstoffatomen, ist in weiten Grenzen variabel; normalerweise liegt er zwischen etwa 10 und etwa 98%, vorzugsweise zwischen etwa 80 und 98%. Wenn in den Ausgangspolymerisaten nicht alle Seitenketten-Endgruppen –CHFX fluorosulfatiert werden, bleibt natürlich ein Teil der genannten Seitenketten-Endgruppen unverändert im Polymerisat, was aber für die Weiterverarbeitung in keiner Weise etwa stört.

Die in Stufe a) des erfindungsgemässen Verfahrens erhaltenen praktisch unvernetzten Fluorkohlenstoffpolymerisate mit den Seitenketten-Endgruppen

$$\begin{array}{l}-CFX\\ \;\;|\\ \;\;OSO_2F\end{array}$$

($X = F$ oder $CF_3$) sind neue Verbindungen.

Sie können ohne weiteres nach Reaktionsschritt b) des erfindungsgemässen Verfahrens zu den entsprechenden Carboxylgruppen tragenden Fluorkohlenstoffpolymerisaten weiterverarbeitet werden. Die hier angewandten Methoden sind zumindest zum Teil an sich bekannt.

Im Falle $b_1$) – d.h. also wenn in den Endgruppen der Fluorsulfatoverbindungen $X = F$ – geschieht die Weiterverarbeitung

$b_{11}$) mit einem Alkohol der Formel ROH ($R = C_1$–$C_6$-Alkyl) – vorzugsweise mit Methanol oder Ethanol. Dazu wird das Polymerisat zweckmässig in Pulverform in Alkohol durch Rühren suspendiert, anschliessend darin auf erhöhte Temperatur – vorzugsweise auf etwa 80–180 °C – erhitzt, dann abgetrennt und getrocknet. Auf diese Weise werden die Fluorsulfatogruppen in die Carboalkoxygruppen –COOR umgewandelt.

Es ist aber auch möglich, das noch feuchte Polymerisat zur Entfernung von Fluorsulfonsäure mit konzentrierter Schwefelsäure zu waschen. Daran können sich dann eine oder mehrere Wäschen mit einem geeigneten Lösemittel, z.B. mit einem Fluorkohlenwasserstoff, anschliessen, dem bei jeder Wäsche sukzessiv mehr Anteile eines Alkohols ROH zugesetzt wird. Zuletzt wird, wie oben beschrieben, das Pulver in reinem Alkohol aufgerührt, erhitzt, dann abgetrennt und getrocknet.

Bei niedrig siedenden Alkoholen wird die Behandlung bei erhöhter Temperatur gegebenenfalls in einem druckfesten Behälter durchgeführt.

Die Polymerisate mit den so gebildeten Estergruppen als Seitenketten-Endgruppen werden dann zur Umwandlung der Ester in die freien Carboxylgruppen einer sauren oder alkalischen Verseifung in üblicher Weise unterworfen. Bei der sauren Verseifung entstehen die freien Carboxylgruppen, bei der alkalischen die Carboxylgruppen in Salzform.

$b_{12}$) Die $-CF_2OSO_2F$-Gruppen der in Reaktionsschritt a) des erfindungsgemässen Verfahrens erhaltenen Fluorsulfatoverbindungen können mit Wasser, gegebenenfalls in Gegenwart eines Lösungsmittels und/oder von Basen auch direkt in die Carboxylgruppen in freier oder in Salzform umgewandelt werden. Dies kann – in einfachster Form – z.B. durch Rühren des Fluorsulfatoprodukts in Wasser und anschliessendes Abtrennen und Trocknen geschehen.

Lösungsmittel wie z.B. Alkohole, Ether, und/oder Basen wie z.B. Alkalilaugen können hierbei zugegen sein. Je nach der Menge der anwesenden Basen entsteht die Carboxylgruppe dann in Salzform.

Um auch hier gegebenenfalls die Fluorsulfatogruppen vollständig abzuspalten, wird das Polymerisat zweckmässig in Wasser auf erhöhte Temperatur – vorzugsweise etwa 80 bis etwa 180 °C – erhitzt.

$b_2$) Wenn in den Seitenketten-Endgruppen der in Reaktionsschritt a) des erfindungsgemässen Verfahrens gebildeten Fluorsulfatoverbindungen $X = CF_3$, werden

$b_{21}$) die Seitenketten-Endgruppen

$$\begin{array}{l}-CF-CF_3\\ \;\;|\\ \;\;OSO_2F\end{array}$$

zu den entsprechenden Ketongruppen

$$\begin{array}{l}-C-CF_3\\ \;\;\|\\ \;\;O\end{array}$$

durch Zersetzung in Gegenwart katalytischer Mengen von Alkalifluoriden und/oder von aprotischen Stickstoffbasen umgewandelt. Dieser Verfahrensschritt entspricht der in DE-A 3 034 491 (EP-A 0 047 948) beschriebenen Methode.

Als aprotische Stickstoffbasen können hier z.B. Triethylamin, 1,4-Diazabicyclo[2.2.0]octan oder

1,8-Diazabiocyclo[5.4.0]undec-7-en verwendet werden. Der Katalysator wird vorzugsweise in einer Menge von etwa 1 bis 50 Mol.-%, bezogen auf die zu zersetzende Fluorsulfatoverbindung, eingesetzt.

Die Reaktionstemperaturen liegen je nach dem verwendeten Katalysator zwischen etwa −40 und +120 °C.

Diese Reaktion wird vorzugsweise in inerten, aprotischen Lösungsmitteln wie z. B. Ethern oder Nitrilen durchgeführt.

Weiterhin kann sowohl bei Normaldruck als auch unter Überdruck gearbeitet werden.

$b_{22}$) Die in der vorstehend geschilderten Verfahrensstufe $b_{21}$) gebildeten Polymerisate mit den Seitenketten-Endgruppen

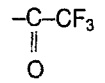

werden dann auf an sich bekannte Weise durch Hydrolyse vorzugsweise in einem stark basischen Medium in die Produkte mit Carboxylgruppen in freier oder in Salzform umgewandelt.

Wegen der erst nachträglichen Funktionalisierung entsprechender unvernetzter Fluorkohlenstoffpolymerisate, die ohne merkliche eintretende Vernetzung erfolgt, stellt das erfindungsgemässe Verfahren einen vorteilhaften und fortschrittlichen Weg zu Carboxylgruppen enthaltenden Fluorkohlenstoffpolymerisaten dar. Dieser Weg wird über die dabei als Zwischenprodukte auftretenden Fluorsulfatoverbindungen ermöglicht.

Die Erfindung wird nun durch die nachfolgenden Beispiele näher erläutert.

Erfindungsgemässes Verfahren

Beispiel 1

a) Die Elektrolysezelle besteht aus einer labormässigen Glaszylinderzelle mit 110 mm Durchmesser und 250 mm Höhe, die mit einem Kühlmantel versehen ist. Der Boden des Gefässes wird von der plattenförmigen Anode aus 3 mm dickem glasartigem Kohlenstoff gebildet. Auf ihr läuft ein PTFE (= Polytetrafluorethylen)-ummantelter Magnetrührstab. Die Kathode wird von einem 4 mm starken Stab aus glasartigem Kohlenstoff gebildet, der am Deckel befestigt zentrisch in der Zelle hängt und ca. 40 mm über der Anode endet. Bis auf ein unterstes 35 mm langes freibleibendes Stück ist der Kathodenstab mit PTFE-Schlauch ummantelt. Somit ergibt sich ein Verhältnis Anoden-/Kathodenoberfläche von ca. 21.

Zur Herstellung des Elektrolyten werden 29,2 g (0,5 Mol) pulverisiertes Natriumchlorid mit 1400 g frisch destillierter Fluorsulfonsäure versetzt und der entstehende Chlorwasserstoff laufend mit trockenem Stickstoffgas gestrippt.

Zu dieser Lösung werden 150 g feingepulvertes Copolymer aus 90 Mol.-% Tetrafluorethylen und 10 Mol.-% ω-H-Perfluor(propylvinylether) $H(CF_2)_3-OCF=CF_2$ gegeben und durch Rühren in Suspension gehalten. Dann wird 40 Stunden bei 5 A und einer Temperatur von 10–15 °C elektrolysiert, wobei die Zellspannung ca. 15 V beträgt. Nach Beendigung der Elektrolyse wird der Elektrolyt vom Polymerpulver durch eine Glasfritte abgesaugt und das Pulver anschliessend in einem 250 ml-Rundkolben unter Ölpumpenvakuum getrocknet.

$b_1$) So erhaltenes Pulver wird dann in einem 2-Liter-Autoklaven aus Chromnickelstahl in 500 ml wasserfreiem Methanol auf 130 °C unter Eigendruck des Methanols (ca. 6 bar) für 8 Stunden erhitzt. Nach Abkühlen wird das Pulver vom Methanol abgetrennt und im Wasserstrahlvakuum getrocknet. Im Schwingungsspektrum von dünnen Plättchen, die aus diesem Pulver gepresst werden, ist sichtbar, dass neben den neu gebildeten Carbomethoxygruppen keine $CF_2H$- oder Fluorsulfatogruppen mehr vorhanden sind.

Die Carbomethoxygruppen werden wie üblich verseift.

Beispiel 2

a) Elektrolysezelle und Elektrolytsystem werden wie in Beispiel 1 beschrieben verwendet.

Ohne Zugabe von Polymerpulver werden 1500 g Elektrolyt 40 Stunden bei 5 A und einer Temperatur von ca. 10–20 °C elektrolysiert, wobei die Zellspannung ca. 15 V beträgt. Danach ist der Elektrolyt nach Iodometrie etwa 1 molar an Peroxodisulfuryldifluorid und wird mit 150 g feingepulvertem Copolymer aus 75 Mol.-% Tetrafluorethylen und 25 Mol.-% ω-H-Perfluor(propylvinylether) versetzt. Die Mischung wird 5 Stunden kräftig bei 25 °C gerührt, sodann durch eine Glasfritte filtriert und der Filterkuchen mit 500 ml konzentrierter Schwefelsäure gewaschen. Es schliessen sich zwei Wäschen mit Trifluortrichlorethan (Frigen 113 der Hoechst AG) an, dem zuerst 10 Vol.-%, dann 30 Vol.-% Methanol zugefügt sind.

$b_1$) Dann wird das Pulver in 500 ml Methanol, dem 15 g Triethylamin zugefügt werden, suspendiert und in einem 2-Liter-Chromnickelstahl-autoklaven unter Eigendruck des Methanols für 8 Stunden auf 130 °C erhitzt. Nach Abkühlen wird das Pulver von der Flüssigkeit abgetrennt und im Vakuum getrocknet. Das Infrarotspektrum des Produktes zeigt, dass die Polymerseitenketten jetzt praktisch vollständig mit Triethylammoniumcarboxylatgruppen substituiert sind. Das Äquivalentgewicht dieses Polymers beträgt ca. 590.

Beispiel 3

a) In einem 250 ml-Rundkolben werden 10 g Copolymer aus 85 Mol.-% Tetrafluorethylen und 15 Mol.-% ω-H-Perfluor(propylvinylether) in 90 ml Perfluor (2-ethoxy-3,6-dimethyl-1,4-dioxan) (Sdp. 87 °C) suspendiert. Unter Rühren werden 18 g (0,09 Mol) frisch destilliertes Peroxodisulfuryldifluorid (Sdp. 65 °C; iodometrisch 99,5%-ig) bei 20 °C binnen 30 min zugetropft. Anschliessend wird die Suspension noch 4 h bei ca. 25 °C gerührt, dann über eine Glasfritte abfiltriert und das erhaltene Pulver unter vermindertem Druck getrocknet. Im IR-Spektrum eines dünnen Plättchens, das aus diesem Pulver gepresst wurde, zeigt sich am Verschwinden der C-H-Schwingungen des Ausgangspolymers (3000 $cm^{-1}$ C-H-Streck; 1405 C-H-Deformation) und am Erscheinen der für Perfluoralkylfluorosulfate typischen S=O-Streckschwingung (1495 $cm^{-1}$), dass die Substitution praktisch vollständig erfolgte.

Erfindungsgemässe Ausgangspolymere

Beispiel 4

In einem emaillierten Kessel mit 4000 ml Volumen, der mit einem Flügelrührer versehen ist, gibt man 2500 ml Frigen F 113 und 800 g ω-H-Perfluorpropylvinylether $HCF_2–CF_2–CF_2–O–CF=CF_2$. Man spült 3 × mit Stickstoff und 3 × mit Tetrafluorethylen $CF_2=CF_2$, presst 4 bar Tetrafluorethylen auf und startet bei 40 °C mit 1,5 g Bis-perfluorpropionylperoxid. Innerhalb von 90 min. werden dann 700 g Tetrafluorethylen bei konstanter Temperatur und Druck eingefahren. Nach Abdampfen des überschüssigen Ethers und Lösungsmittels erhält man 990 g Polymer mit einem Ethergehalt von 29,2 Gew.-% = 15,1 Mol.-% (bestimmt über Kesselbilanz). Das Polymere besitzt bei 250 °C und 5 kg Belastung einen Schmelzindexwert von 4 g/10 min.

Beispiel 5

In einem emaillierten Kessel mit 4000 ml Volumen, der mit einem Flügelrührer versehen ist, gibt man 2000 ml Frigen F 113 und 1200 g ω-H-Perfluorpropylvinylether. Man spült 3 × mit Stickstoff und 3 × mit Tetrafluorethylen, presst 4 bar Tetrafluorethylen auf und startet bei 40 °C mit 2 g Bis-perfluorpropionylperoxid. Innerhalb von 120 min. werden dann 550 g Tetrafluorethylen bei konstanter Temperatur und Druck eingefahren. Nach Abdampfen des überschüssigen Ethers und Lösungsmittels erhält man 970 g Polymer mit einem Ethergehalt von 43,3 Gew.-% = 24,8 Mol.-% (bestimmt aus Kesselbilanz). Das Polymere besitzt bei 250 °C und 5 kg Belastung einen Schmelzindexwert von 220 g/10 min.

Beispiel 6

Es wird analog Beispiel 4 gearbeitet; jedoch werden statt 800 g ω-H-Perfluorpropylvinylether 800 g ω-H-Perfluorpentylvinylether eingesetzt. Nach Abdampfen von überschüssigem Ether und Lösungsmittel erhält man 1260 g Polymer mit einem Ethergehalt von 44,4 Gew.-% = 19,4 Mol.-% (bestimmt aus Kesselbilanz). Das Polymere besitzt bei 250 °C und 5 kg Belastung einen Schmelzindexwert von 145 g/10 min.

Beispiel 7

In einem emaillierten Kessel mit 4000 ml Volumen, der mit einem Flügelrührer versehen ist, gibt man 2700 ml Frigen F 113 und 600 g 2-(3-Hydroperfluor-n-butoxy)-perfluorpropylvinylether. Man spült 3 × mit Stickstoff und 3 × mit Tetrafluorethylen, presst 4 bar Tetrafluorethylen auf und startet bei 40 °C mit 1,5 g Bis-perfluorpropionylperoxid. Innerhalb von 60 min werden dann 550 g Tetrafluorethylen bei konstanter Temperatur und Druck zugefahren. Nach Abdampfen von überschüssigem Ether und Lösungsmittel erhält man 1030 g Polymer mit einem Ethergehalt von 46,6 Gew.-% = 15,8 Mol.-% (bestimmt aus Kesselbilanz). Das Polymere besitzt bei 250 °C und 5 kg Belastung einen Schmelzindexwert von 2 g/10 min.

**Patentansprüche**

1. Verfahren zur Herstellung von Carboxylgruppen enthaltenden unvernetzten Fluorkohlenstoffpolymerisaten,
gekennzeichnet durch folgende Reaktionsschritte:

a) Umsetzung von unvernetzten Fluorkohlenstoffpolymerisaten, deren lineare Makromoleküle Seitenketten mit der Endgruppe

$$-CHFX$$
worin X = F oder $CF_3$

tragen, mit Peroxodisulfuryldifluorid $FSO_2O–OSO_2F$ zu den entsprechenden Fluorsulfatoderivaten mit den Seitenketten-Endgruppen

$$\begin{array}{l}-CFX\\ \;\;| \\ \;\;OSO_2F\end{array}$$

und

b) Umsetzung dieser Fluorsulfatoderivate

$b_1$) im Falle von X = F

$b_{11}$) mit einem Alkohol der Formel ROH (R = $C_1–C_6$-Alkyl, vorzugsweise Methyl oder Ethyl) zu den entsprechenden Estern mit den Seitenketten-Endgruppen

–COOR (R = $C_1$ bis $C_6$ Alkyl, vorzugsweise Methyl oder Ethyl),

welche zu den freien Carboxylgruppen

$$-COOH$$

als solchen oder in Salzform verseift werden, oder

$b_{12}$) mit Wasser, gegebenenfalls in Gegenwart eines Lösungsmittels und/oder von Basen direkt zu den Produkten mit der Carboxylgruppe

$$-COOH$$

in freier oder in Salzform als Seitenketten-Endgruppe, und

$b_2$) im Falle von X = $CF_3$

$b_{21}$) zu den entsprechenden Ketonen mit den Seitenketten-Endgruppen

$$\begin{array}{l}-C-CF_3\\ \;\;\| \\ \;\;O\end{array}$$

durch Zersetzung in Gegenwart katalytischer Mengen von Alkalifluoriden und/oder von aprotischen Stickstoffbasen und

$b_{22}$) Hydrolyse der Ketone zu den Produkten mit der Carboxylgruppe

$$-COOH$$

in freier oder in Salzform als Seitenketten-Endgruppe.

2. Verfahren nach Anspruch 1, dadurch gekennzeichnet, dass man als unvernetzte Ausgangs-Fluorkohlenstoffpolymerisate, deren Makromoleküle Seitenketten mit der Endgruppe

$$-CHFX$$

worin X = F oder $CF_3$

tragen, Polymerisate mit wiederkehrenden Einheiten der Formel (A)

$CF_2$ Y
| |
$CF-(-O-CF_2-CF-)_u-O_v-(CF_2)_w-CHFX$, (A)
|

worin
u = 0, 1 oder 2,
v = 0 oder 1,
w = 1–7,
X und Y = unabhängig voneinander F oder $CF_3$,
alleine oder neben anderen wiederkehrenden Einheiten der Formel (B)

$$-CF_2-CFZ- \quad (B)$$

worin Z = Cl, F, $R_f$ oder $-OR_f$ ($R_f$ = $CF_3$ oder ein ggf. durch O-Atome unterbrochener $C_2$–$C_8$-Perfluoralkylrest), verwendet.

3. Verfahren nach Anspruch 1 oder 2, gekennzeichnet durch die Verwendung unvernetzter Ausgangs-Fluorkohlenstoffpolymerisate mit den Seitenketten-Endgruppen $-CHF_2$.

4. Verfahren nach einem oder mehreren der Ansprüche 1 bis 3, dadurch gekennzeichnet, dass man Reaktionsschritt a) mit Peroxodisulfuryldifluorid durchführt, welches elektrochemisch durch Elektrolyse von alkalifluorsulfonathaltiger Fluorsulfonsäure erhalten wurde.

5. Verfahren nach einem oder mehreren der Ansprüche 1 bis 4, dadurch gekennzeichnet, dass man Reaktionsschritt a) mit elektrochemisch erzeugtem Peroxodisulfuryldifluorid derart durchführt, dass man das unvernetzte Ausgangs-Fluorkohlenstoffpolymerisat mit den Seitenketten-Endgruppen $-CHFX$ (X = F oder $CF_3$) in einem Elektrolyten aus Fluorsulfonsäure und einem Alkalifluorsulfonat unter Verwendung von Platin, Platinlegierungen mit Metallen der Platin-Gruppe und/oder von glasartigem Kohlenstoff als Anodenmaterialien und von üblichen, jedoch unter den Elektrolysebedingungen stabilen Kathodenmaterialien, elektrolysiert.

6. Unvernetzte Fluorkohlenstoffpolymerisate mit wiederkehrenden Einheiten der Formel (A)

|
$CF_2$ Y
| |
$CF-(-O-CF_2-CF-)_u-O_v-(CF_2)_w-CHFX$, (A)
|

worin
u = 0, 1 oder 2,
v = 0 oder 1,
w = 1–7,
X und Y = unabhängig voneinander F oder $CF_3$,
und wiederkehrenden Einheiten der Formel (B)

$$-CF_2-CFZ- \quad (B)$$

worin Z = Cl, F, $R_f$ oder $-OR_f$ ($R_f$ = $CF_3$ oder ein ggf. durch O-Atome unterbrochener $C_2$–$C_8$-Perfluoralkylrest), wobei die Einheiten (A) und (B) im Molverhältnis 1:2 bis 20, insbesondere 1:etwa 2–8 stehen.

7. Unvernetzte Fluorkohlenstoffpolymerisate nach Anspruch 6, in deren wiederkehrende Einheiten (A) und (B)
u = 0 oder 1,
v = 1,
w = 1–5,
X = F oder $CF_3$,
Y = $CF_3$,
Z = F, $CF_3$, $-O-CF_2-CF_2-CF_3$ oder
$-O-CF_2-CF-O-CF_2-CF_2-CF_3$,
|
$CF_3$

insbesondere nur F.

8. Unvernetzte Fluorkohlenstoffbipolymerisate nach Anspruch 6 oder 7 mit wiederkehrenden Einheiten (A) und wiederkehrenden Einheiten $-CF_2-CF_2-$ als (B).

9. Unvernetzte Fluorkohlenstoffterpolymerisate nach Anspruch 6 oder 7 mit wiederkehrenden Einheiten (A) und wiederkehrenden Einheiten $-CF_2-CF_2-$ sowie $-CF_2-CFZ-$, worin Z die vorgenannte Bedeutung ausser =F besitzt als (B).

10. Unvernetzte Fluorkohlenstoffpolymerisate, deren lineare Makromoleküle Seitenketten mit der Endgruppe

$-CFX$
|
$OSO_2F$

worin X = F oder $CF_3$
bedeutet, tragen.

**Claims**

1. A process for the preparation of a non-crosslinked fluorocarbon polymer containing carboxyl groups characterized by the following reaction stages:

a) reacting non-crosslinked fluorocarbon polymers in which the linear macromolecules carry side chains containing the end group $-CHFX$ in which X is F or $CF_3$, with peroxodisulfuryl difluoride $FSO_2O-OSO_2F$ to give the corresponding fluorosulfato derivatives containing the side chain end groups

$-CFX$
|
$OSO_2F$

and

b) reacting these fluorosulfato derivatives:

$b_1$) in the event that X is F:

$b_{11}$) with an alcohol of the formula ROH (R is $C_1$–$C_6$-alkyl, preferably methyl or ethyl) to give the corresponding esters containing the side chain end groups $-COOR$ (R is $C_1$ to $C_6$ alkyl, preferably

methyl or ethyl), which are saponified to give the free carboxyl groups $-COOH$, as such or in the form of a salt, or

$b_{12}$) with water, if appropriate in the presence of a solvent and/or bases, to give, without further treatment, the products containing, as side chain end groups, the carboxyl group $-COOH$ in the free form or in the form of a salt, and

$b_2$) in the event that X is $CF_3$:

$b_{21}$) to give the corresponding ketones containing the side chain groups

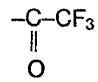

by decomposition in the presence of catalytic amounts of alkali metal fluorides and/or aprotic nitrogen bases, and

$b_{22}$) hydrolyzing the ketones to give the products containing, as the side chain end group, the carboxyl group $-COOH$ in the free form or in the form of a salt.

2. The process as claimed in claim 1, characterized in that the non-crosslinked starting fluorocarbon polymers in which the macromolecules carry side chains containing the end group $-CHFX$ in which X is F or $CF_3$, are polymers containing recurring units of the formula (A)

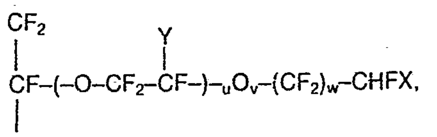 (A)

in which u is 0, 1 or 2, v is 0 or 1, w is 1–7 and X and Y independently of one another are F or $CF_3$, on their own or together with other recurring units of the formula (B)

$$-CF_2-CFZ- \quad (B)$$

in which Z is Cl, F, $R_f$ or $-OR_f$ ($R_f$ is $CF_3$ or a $C_2-C_8$-perfluoroalkyl radical which is optionally interrupted by O atoms).

3. The process as claimed in claim 1 or 2, characterized in that non-crosslinked starting fluorocarbon polymers containing the side chain end groups $-CHF_2$ are used.

4. The process as claimed in one or more of claims 1 to 3, characterized in that reaction stage a) is carried out using peroxodisulfuryl difluoride which has been obtained electrochemically by electrolyzing fluorosulfonic acid containing alkali metal fluorosulfonates.

5. The process as claimed in one or more of claims 1 to 4, characterized in that reaction stage a) is carried out using electrochemically prepared peroxodisulfuryl difluoride by electrolyzing the non-crosslinked starting fluorocarbon polymer containing the side chain end groups $-CHFX$ (X is F or $CF_3$) in an electrolyte composed of fluorosulfonic acid and an alkali metal fluorosulfonate using platinum, alloys of platinum with metals of the platinum group and/or vitreous carbon as anode materials and cathode materials which are customary, but stable under the conditions of electrolysis.

6. A non-crosslinked fluorocarbon polymer containing recurring units of the formula (A)

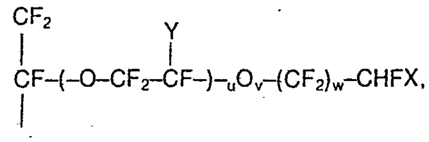 (A)

in which u is 0, 1 or 2, v is 0 or 1, w is 1–7 and X and Y independently of one another are F or $CF_3$, and recurring units of the formula (B)

$$-CF_2-CFZ \quad (B)$$

in which Z is Cl, F, $R_f$ or $-OR_f$ ($R_f$ is $CF_3$ or a $C_2-C_8$-perfluoroalkyl radical which is optionally interrupted by O atoms), the units (A) and (B) being present in a molar ratio of 1:2 to 20, in particular 1:about 2 to 8.

7. A non-crosslinked fluorocarbon polymer as claimed in claim 6, in the recurring units (A) and (B) of which u is 0 or 1, v is 1, w is 1–5, X is F or $CF_3$, Y is $CF_3$ and Z is F, $CF_3$, $-O-CF_2-CF_2-CF_3$ or

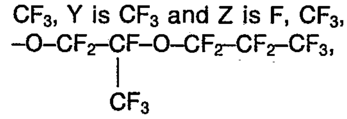

in particular only F.

8. A non-crosslinked fluorocarbon bipolymer as claimed in claim 6 or 7 containing recurring units (A) and, as (B), recurring units $-CF_2-CF_2-$.

9. A non-crosslinked fluorocarbon terpolymer as claimed in claim 6 or 7 containing recurring units (A) and, as (B), recurring units $-CF_2-CF_2-$ and $-CF_2-CFZ-$ in which Z has the meaning mentioned above excluding F.

10. A non-crosslinked fluorocarbon polymer in which the linear macromolecules carry side chains containing the end group

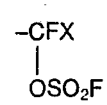

in which X is F or $CF_3$.

## Revendications

1. Procédé de préparation de polymères fluorocarbonés non réticulés contenant des radicaux carboxy, caractérisé par les étapes réactionnelles suivantes:

a) conversion, au moyen du peroxyde de bis-(fluorosulfuryle) $FSO_2O-OSO_2F$, de polymères fluorocarbonés non réticulés dont les macromolécules linéaires portent des chaînes latérales comportant le radical terminal $-CHFX$ dans lequel X représente F ou $CF_3$, en les dérivés fluorosulfatés correspondants porteurs, sur leurs chaînes latérales, des radicaux terminaux

$$-\underset{\displaystyle OSO_2F}{\underset{|}{C}}FX$$

b) conversion de ces dérivés fluorosulfatés

$b_1$) dans le cas où X représente F

$b_{11}$) en les esters correspondants porteurs, sur leurs chaînes latérales, des radicaux terminaux $-COOR$ (R représentant un alkyle en $C_1$ à $C_6$, de préférence un radical méthyle ou éthyle), au moyen d'un alcool de formule ROH (R représentant un alkyle en $C_1$ à $C_6$, de préférence un radical méthyle ou éthyle), ces radicaux étant saponifiés pour donner les radicaux carboxy $-COOH$ libres ou sous forme de sels, ou

$b_{12}$) directement en les produits comportant le radical carboxy $-COOH$ libre ou salifié comme radical terminal des chaînes latérales, avec de l'eau, éventuellement en présence d'un solvant et/ou de bases, et

$b_2$) dans le cas où X représente $CF_3$

$b_{21}$) en les cétones correspondantes porteuses, sur leurs chaînes latérales, des radicaux terminaux

$$-\underset{\displaystyle O}{\underset{\|}{C}}-CF_3$$

par décomposition en présence de quantités catalytiques de fluorures de métaux alcalins et/ou de bases azotées aprotiques et

$b_{22}$) par hydrolyse des cétones en les produits comportant le radical carboxy $-COOH$ libre ou salifié en tant que radical terminal des chaînes latérales.

2. Procédé selon la revendication 1, caractérisé en ce que l'on utilise, en tant que polymères fluorocarbonés non réticulés de départ dont les macromolécules portent des chaînes latérales comportant le radical terminal $-CHFX$ dans lequel X représente F ou $CF_3$, des polymères dont les motifs répétitifs répondent à la formule (A)

$$\begin{array}{l} | \\ CF_2 \\ | \\ CF-(-O-CF_2-\overset{\displaystyle Y}{\overset{|}{C}}F-)-_uO_v-(CF_2)_w-CHFX, \\ | \end{array} \qquad (A)$$

dans laquelle

u = 0, 1 ou 2,

v = 0 ou 1,

w = 1–7, et

X et Y représentent indépendamment l'un de l'autre F ou $CF_3$,

seuls ou avec d'autres motifs répétitifs de formule (B)

$$-CF_2-CFZ- \qquad (B)$$

dans laquelle Z = Cl, F, $R_f$ ou $-OR_f$ ($R_f$ représentant $CF_3$ ou un reste perfluoroalkyle en $C_2$–$C_8$ éventuellement interrompu par des atomes d'oxygène).

3. Procédé selon la revendication 1 ou 2, caractérisé en ce que l'on utilise des polymères fluorocarbonés non réticulés de départ dont les chaînes latérales comportent le radical terminal $-CHF_2$.

4. Procédé selon une ou plusieurs des revendications 1 à 3, caractérisé en ce que l'on exécute l'étape réactionnelle a) avec du peroxyde de bis-(fluorosulfuryle) préparé par voie électrochimique par électrolyse d'un acide fluorosulfonique contenant un fluorosulfonate de métal alcalin.

5. Procédé selon une ou plusieurs des revendications 1 à 4, caractérisé en ce que l'on exécute l'étape réactionnelle a) avec du peroxyde de bis-(fluorosulfuryle) préparé par voie électrochimique, de telle façon que l'on électrolyse le polymère fluorocarboné non réticulé de départ dont les chaînes latérales comportent les radicaux terminaux $-CHFX$ (X représentant F ou $CF_3$), dans un électrolyte constitué par de l'acide fluorosulfonique et par un fluorosulfonate alcalin, en utilisant comme matériaux anodiques le platine, les alliages du platine avec des métaux du groupe du platine et/ou du carbone vitreux et, comme matériaux cathodiques, les matériaux habituels qui supportent les conditions de l'électrolyse.

6. Polymères fluorocarbonés non réticulés, comprenant des motifs répétitifs répondant à la formule (A)

$$\begin{array}{l} | \\ CF_2 \\ | \\ CF-(-O-CF_2-\overset{\displaystyle Y}{\overset{|}{C}}F-)-_uO_v-(CF_2)_w-CHFX, \\ | \end{array} \qquad (A)$$

dans laquelle

u = 0, 1 ou 2,

v = 0 ou 1,

w = 1–7 et

X et Y représentent, indépendamment l'un de l'autre, F ou $CF_3$,

et des motifs répétitifs de formule (B)

$$-CF_2-CFZ- \qquad (B)$$

dans laquelle Z = Cl, F, $R_f$ ou $-OR_f$ ($R_f$ représentant $CF_3$ ou un reste perfluoroalkyle en $C_2$–$C_8$ éventuellement interrompu par des atomes d'oxygène), le rapport molaire entre les motifs (A) et (B) valant 1:(2–20), en particulier 1:(2–8).

7. Polymères fluorocarbonés non réticulés selon la revendication 6, dans les motifs répétitifs (A) et (B) desquels

u = 0 ou 1,

v = 1,

w = 1 à 5,

X = F ou $CF_3$,

Y = $CF_3$ et

Z = F, $CF_3$, $-O-CF_2-CF_2-CF_3$ ou

$$-O-CF_2-\underset{\displaystyle CF_3}{\underset{|}{C}}F-O-CF_2-CF_2-CF_3,$$

et en particulier Z = F seulement.

8. Polymères fluorocarbonés non réticulés selon la revendication 6 ou la revendication 7, comprenant des motifs répétitifs (A) et des motifs $-CF_2-CF_2-$ en tant que motifs répétitifs (B).

9. Polymères fluorocarbonés non réticulés selon la revendication 6 ou la revendication 7, comportant des motifs répétitifs (A) et, en tant que motifs répétitifs (B), des motifs $-CF_2-CF_2-$ et $CF_2-CFZ$ où Z a la signification donnée plus haut, à l'exception de F.

10. Polymères fluorocarbonés non réticulés dont les macromolécules linéaires portent des chaînes latérales comportant le radical terminal

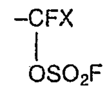

dans lequel X représente F ou $CF_3$.